# EUROPÄISCHE PATENTANMELDUNG

(11) **EP 3 216 726 A1**
(43) Veröffentlichungstag der Anmeldung: **13.09.2017**
(21) Anmeldenummer: 17154765.6
(22) Anmeldetag: 06.02.2017
(51) Int. Cl.: B65G 1/04, B66F 9/075

(54) **VERFAHREN ZUM VOLL- UND/ODER TEILAUTOMATISCHEN EINRICHTEN ODER KALIBRIEREN EINER AUFNAHME- UND/ODER EINER ABLAGEPOSITION**

(30) Priorität: 08.03.2016 DE 102016002815
(71) Anmelder: Liebherr-Verzahntechnik GmbH, 87437 Kempten (DE)
(72) Erfinder: Mattern, Thomas, 87669 Rieden (DE); Zollitsch, Markus, 87490 Haldenwang (DE); Stetter, Robert, 87488 Betzigau (DE)
(74) Vertreter: Laufhütte, Dieter

(57) **Zusammenfassung**

Die Erfindung betrifft ein Verfahren zum voll- und/oder teilautomatischen Einrichten oder Kalibrieren einer Aufnahme- und/oder einer Ablageposition, mit wenigstens einem Regalbediengerät und/oder wenigstens einem Fahrwagen, einer Steuerungs-/Reglungseinrichtung, wenigstens einem Erfassungssystem, insbesondere einem optischem Erfassungssystem, und wenigstens einem Positionsmerkmal, wobei das Verfahren folgende Schritte umfasst:
- manuelle und/oder automatische Hinterlegung der Positionen der Positionsmerkmale;
- automatisches Anfahren der hinterlegten Positionen, mittels des Regalbediengeräts und/oder des Fahrwagens;
- Erfassen eines Istwerts der Position des Positionsmerkmals mittels des Erfassungssystems, insbesondere einem optischen Erfassungssystems; und
- Berechnung einer Abweichung zwischen der hinterlegten Position und dem Istwert, ggf. Durchführung einer Korrektur und ggf. Abspeichern eines Korrekturwertes der Position des Positionsmerkmals.

## Beschreibung

Die Erfindung betrifft ein Verfahren zum voll- und/oder teilautomatischen Einrichten oder Kalibrieren einer Aufnahme- und/oder einer Ablageposition, mit wenigstens einem Regalbediengerät und/oder wenigstens einem Fahrwagen, einer Steuerungs-/Regelungseinrichtung, wenigstens einem Erfassungssystem, insbesondere einem optischem Erfassungssystem und wenigstens einem Positionsmerkmal. Des Weiteren betrifft die Erfindung ein System, welches zur Durchführung eines Verfahrens zum voll- und/oder teilautomatischen Einrichten oder Kalibrieren ausgestaltbar ist.

Aus der Druckschrift DE 10 2013 111 187 A1 ist eine Vorrichtung zur Feinpositionierung eines Regalbediengeräts an einem Fach eines Hochregallagers bekannt. Dabei ist es bekannt, dass als Voraussetzung für eine exakte Feinpositionierung ein dem Prozessbetrieb vorausgehender Einrichtbetrieb durchzuführen ist. Der Einrichtbetrieb wird dabei allerdings durch den Benutzer mittels einer Anzeige an der Anzeigeeinheit durch Verstellen eines optischen Sensors an einer Halterung durchgeführt. Der optische Sensor wird dabei exakt auf eine Markierung am jeweiligen Fach ausgerichtet. Nach der Ausrichtung des optischen Sensors wird der Einrichtbetrieb beendet, wobei im Prozessbetrieb das Regalbediengerät selbsttätig einzelne Fächer zum Be- oder Entladen mit Gegenständen anfährt. Die Feinpositionierung des Regalbediengeräts erfolgt dabei im Prozessbetrieb selbständig. Nachteilig ist dabei allerdings, dass der Einrichtbetrieb vorab manuell durch einen Benutzer erfolgen muss und diesbezüglich keine Automation gegeben ist. Dies bringt es mit sich, dass der Einrichtbetrieb zeitaufwändig und fehleranfällig ist.

Ebenfalls sind Verfahren zum Einrichten eines Regallagers und/oder einer Maschine, eines Rüstplatzes, einer Messstation oder einer Reinigungsstation bekannt, welche bislang manuell durch Maschineninbetriebnehmer oder Monteure erfolgen. Basis für die bekannten Systeme sind vorzugsweise standardisierte Maschinenpaletten, auf welchen die zu bearbeitenden Werkstücke oder das zu lagernde und/oder zu transportierende Gut manuell oder automatisch aufgespannt wird. Ebenfalls können sonstige Paletten vorgesehen sein, auf denen die zu bearbeitenden Werkstücke oder das zu lagernde und/oder zu transportierende Gut manuell oder automatisch positioniert wird. Ebenso können auch die an sich bekannten Europaletten zusätzlich oder alternativ zu den Maschinenpaletten verwendet werden, um das zu bearbeitende Werkstück auf diesen zu lagern. Bei dem Einrichtbetrieb muss dabei das Regalbediengerät manuell durch den Maschineninbetriebnehmer oder Monteur zu dem jeweiligen Regalplatz, dem Rüstplatz, der Messstation, der Reinigungsstation oder der Maschine verfahren werden. Die Position des Regalbediengerätes wird dann ermittelt und gespeichert und bei Bedarf wird die Position des Regalbediengeräts relativ zum Regalplatz oder zum Rüstplatz, zur Messstation, zur Reinigungsstation oder zur Maschine angepasst und gespeichert, so dass ein Be- bzw. Entladen in der entsprechenden Position des Regalbediengeräts durchgeführt werden kann. Die manuell erfassten Positionsdaten werden in einer Steuerungs-/Regelungseinrichtung hinterlegt, wodurch ein Einrichten des Regalbediengeräts erreicht wird. Nachteilig an dem aus dem Stand der Technik bekannten System ist es, dass das manuelle Einlernen des Regalbediengeräts sehr zeitaufwändig ist, da abhängig von der Größe des Regallagers und der Anzahl der externen Einheiten, wie Maschinen, Rüstplätze, Messstationen, Reinigungsstationen das Einrichten oder Kalibrieren eines Regalbediengeräts viel Zeit in Anspruch nimmt, da der Bediener jede Position erreichen muss, was oftmals nur mit Hilfe von Leitern oder ähnlichem möglich ist. Zudem ist das bekannte Einlernverfahren fehleranfällig, da Fehler beim manuellen Verfahren im Einrichtbetrieb auftreten können und so fehlerhafte Positionsdaten abgespeichert werden können.

Aufgabe der Erfindung ist es daher, ein Verfahren zum voll- und/oder teilautomatischen Einrichten oder Kalibrieren einer Aufnahmeposition und/oder Ablageposition bereitzustellen, welches einfach, zeitsparend und voll- bzw. teilautomatisch durchgeführt werden kann.

Diese Aufgabe wird erfindungsgemäß durch ein Verfahren zum voll- und/oder teilautomatischen Einrichten oder Kalibrieren einer Aufnahme- und/oder Ablageposition mit den Merkmalen des Anspruchs 1 gelöst.

Demnach ist das Verfahren zum voll- und/oder teilautomatischen Einrichten oder Kalibrieren einer Aufnahme- und/oder einer Ablageposition, mit wenigstens einem Regalbediengerät und/oder wenigstens einem Fahrwagen, einer Steuerungs-/Reglungseinrichtung, wenigstens einem Erfassungssystem, insbesondere einem optischem Erfassungssystem, und wenigstens einem Positionsmerkmal ausgestattet, wobei das Verfahren folgende Schritte umfasst:
- manuelle und/oder automatische Hinterlegung der Positionen der Positionsmerkmale;
- automatisches Anfahren der hinterlegten Positionen, mittels des Regalbediengeräts und/oder des Fahrwagens;
- Erfassen eines Istwerts der Position des Positionsmerkmals mittels des Erfassungssystems, insbesondere einem optischen Erfassungssystems; und
- Berechnung einer Abweichung zwischen der hinterlegten Position und dem Istwert, ggf. Durchführung einer Korrektur und ggf. Abspeichern eines Korrekturwertes der Position des Positionsmerkmals.

Mittels eines derartigen Verfahrens soll erreicht werden, dass das Regalbediengerät bzw. der Fahrwagen relativ zur Ablageposition genau positioniert werden kann, sodass eine kollisionsfreie und exakte Be- bzw. Entladung des Systems, der Maschine, des Rüstplatzes, der Messstation oder der Reinigungsstation erzielt werden kann.

Bevorzugte Ausführungen der Erfindung ergeben sich aus den Unteransprüchen.

Bei dem Regalbediengerät kann es sich um eine Vorrichtung handeln, die dazu ausgelegt ist, in horizontale Richtung zu verfahren, Lagergut zu manipulieren, insbesondere zu greifen und zu verfahren. Das Regalbediengerät kann dabei eine automatische Vorrichtung sein.

Der möglicherweise an dem Regalbediengerät vorgesehene Fahrwagen ist dabei in vertikale Richtung verfahrbar.

Eine derartige Ausgestaltung bietet den Vorteil, dass das voll- und/oder teilautomatische Einricht- oder Kalibrierverfahren einen geringeren Zeitaufwand darstellt, da durch die verkürzte Zeit des Einrichtbetriebes Arbeitszeitersparnisse erzielt werden können. Ebenfalls ist durch eine Automation die Fehleranfälligkeit geringer, da die Gefahr von menschlichen Fehlern beim manuellen Einrichtbetrieb verringert werden können.
In einer bevorzugten Ausführung ist es möglich, dass das Verfahren mittels einer Suchfahrt des Regalbediengerätes und/oder Fahrwagens vollautomatisch durch Erfassung der Lage der Positionsmerkmale durch das Erfassungssystem, insbesondere dem optischen Erfassungssystem, die Hinterlegung der Positionen der Positionsmerkmale durchgeführt wird und das Einrichten des Regalbediengerätes und/oder Fahrwagens erreicht wird. Dafür muss lediglich das Erfassungssystem, insbesondere optische Erfassungssystem, an dem Regalbediengerät in einem ersten Schritt des Verfahrens angebracht werden. Die geometrische Ausgestaltung, insbesondere Breite, Höhe und Tiefe des verfahrensgemäß be- bzw. zu entladenen Regallagers, insbesondere der Regalplätze, ist für das Verfahren nicht ausschlaggebend. Somit können naturgemäß auch mehr als ein Regalplatz oder eine Maschine, ein Rüstplatz, eine Messstation, eine Reinigungsstation verfahrensgemäß zum voll- und/oder teilautomatischen Einrichten oder Kalibrieren verwendet werden. Ebenfalls wird unter einem Regallager nicht zwangsweise ein linear verlaufendes Regallager verstanden, sondern auch beispielsweise ein Rundregallager.

Das Verfahren ist unter dem Aspekt des vollautomatischen Einrichtens und/oder Kalibrierens wie folgt durchführbar. Das Regalbediengerät fährt vollautomatisch ein Positionsmerkmal an und speichert die erkannte Position in der Regelungs-/Steuerungseinheit ab. Anschließend werden mittels des Erfassungssystems, insbesondere optischen Erfassungssystems, die weiteren Positionsmerkmale angefahren, erfasst und abgespeichert. Mit der durchgeführten Suchfahrt erfolgt ein wesentlicher Schritt des Einricht- bzw. Kalibriervorgangs des Regalbediengeräts. Je größer die Anzahl der Regalplätze ist, umso mehr wirkt sich die Zeitersparnis bei dem voll- und/oder teilautomatischen Einrichten oder Kalibrieren des Regallagers aus.

In einer weiteren bevorzugten Ausführung ist es möglich, dass mittels manueller Hinterlegung der Positionen, insbesondere mittels CAD-Daten und einer anschließenden Positionsabgleichsfahrt mittels des Erfassungssystems, insbesondere dem optischen Erfassungssystem, das Einrichten und/oder Kalibrieren des Regalbediengerätes und/oder Fahrwagens erreicht wird. Das Verfahren unter dem Aspekt des teilautomatischen Einrichtens und/oder Kalibrierens ist wie folgt durchführbar.

Ist die erste anzufahrende Position vorerst nicht hinterlegt, muss der Maschineninbetriebnehmer oder Monteur den ersten Regalplatz manuell anfahren.

Die Position wird dann mittels des Erfassungssystems, insbesondere optischen Erfassungssystems, ermittelt und in der Regelungs-/Steuerungseinheit hinterlegt. Bei Hinterlegung des ersten Regalplatzes fährt das Regalbediengerät die erste manuell hinterlegte Position selbständig an. Nach der Erfassung bzw. Erkennung der ersten Position kann das Regalbediengerät und/oder der Fahrwagen anschließend automatisch, mittels manuell hinterlegter Koordinaten, insbesondere CAD-Daten, die weiteren Positionen anfahren, das Positionsmerkmal mittels des optischen Erfassungssystems erfassen und gegebenenfalls korrigieren und den Korrekturwert in der Regelungs-/Steuerungseinheit hinterlegen. Der Korrekturwert wird dabei dann abgespeichert, wenn die Abweichung zwischen der hinterlegten Position und dem Istwert größer als ein vorbestimmter Betrag ist. Sind mehrere geometrisch unterschiedliche Regalplätze vorhanden, so können diesen auch unterschiedliche maximale Abweichungswerte zugeordnet werden. Die erfassten Daten bzw. Positionen werden in der Steuerungs-/Regelungseinrichtung abgespeichert. Die Steuerungs-/Regelungseinrichtung kann hierfür entsprechende Speichermedien aufweisen. Mit dem Abspeichern der Position des Positionsmerkmals für jeden Regalplatz erfolgt ein wesentlicher Schritt des Einricht- bzw. Kalibriervorgangs des Regalbediengeräts.

Da im Laufe des Einrichtens die dazugehörige Position des Positionsmerkmals hinterlegt wird, kann das Regalbediengerät nach Durchlaufen bzw. Beendigung des voll- oder teilautomatischen Einrichtens des Regalbediengerätes die entsprechenden Positionsmerkmale selbständig anfahren und in Kenntnis der Position des Regalplatzes, der Maschine, dem Rüstplatz, der Reinigungsstation oder Messstation bezogen auf die Position der abgespeicherten Positionsmerkmale eine Be- oder Entladung durchführen. Ebenfalls können die abgespeicherten Positionsmerkmale aus einem vorherigen Kalibiervorgang verwendet werden, um ggf. Nachjustierungen vornehmen zu können. Darunter sind nicht nur reine Nachjustierungen, sondern eventuelle Serviceeinsätze, eventuelle Reparatureinsätze, eventuelle Kollissionsfälle etc. zu verstehen.

In einer weiteren bevorzugten Ausführung ist es möglich, dass die Ablageposition und die Aufnahmeposition als eine erste Einheit, insbesondere als ein Regallager ausgestaltet ist und die Ablage und Aufnahme mittels des Regalbediengerätes und/oder des Fahrwagens durchgeführt wird. Die Ablage und Aufnahme von Maschinenpaletten, sonstigen Paletten oder Europaletten kann somit präzise und kollisionsfrei in dem Regallager erfolgen.

In einer weiteren bevorzugten Auführung kann die Aufnahmeposition und die Ablageposition als eine zweite Einheit, insbesondere als eine Maschine, eine Reinigungsstation, eine Messstation und/oder ein Rüstplatz ausgestaltet sein und die Aufnahme und Ablage mittels des Regalbediengerätes und/oder des Fahrwagens durchgeführt werden. Die Aufnahme und Ablage von Maschinenpaletten, sonstigen Paletten oder Europaletten kann somit präzise und kollisionsfrei von der Maschine, der Reinigungsstation die Messstation und/oder dem Rüstplatz erfolgen.

Es ist ebenfalls vorteilhaft, dass die Maschinenpaletten, sonstigen Paletten oder Europaletten von dem Regallager aufgenommen und in die Maschine, die Reinigungsstation, die Messstation und/oder den Rüstplatz abgelegt werden.

In einer weiteren bevorzugten Ausführung kann das Positionsmerkmal als ein Strukturelement ausgebildet sein, welches mittels des Erfassungssystems, insbesondere optischen Erfassungssystems, erfassbar ist. Unter einem Strukturelement kann eine durchgängige Öffnung, insbesondere ein Loch und/oder eine Ausnehmung und/oder eine Erhebung verstanden werden. Die durchgängige Öffnung und/oder Ausnehmung kann dabei an einer Struktur des entsprechenden Regalplatzes, der entsprechenden Maschine oder Messstation oder des Rüstplatzes oder der Reinigungsstation vorgesehen sein, so dass in vorteilhafter Weise keine zusätzlichen Vorrichtungen, wie Spiegel oder ähnliches, als Positionsmerkmal bereitgestellt werden müssen. Es kann beispielsweise genügen, einen Träger eines Regalplatzes, welcher vorzugsweise an der zum Regalbediengerät bzw. zum Fahrwagen gerichteten Seite des Regallagers angeordnet ist, an- oder durchzubohren, um ein entsprechendes als Strukturelement ausgebildetes Positionsmerkmal bereitzustellen.

In einer weiteren bevorzugten Ausführung kann das Verfahren unabhängig von der Anzahl und gemoetrischen Ausgestaltung, insbesondere Breite, Höhe und Tiefe der Regalplätze, Maschinen, Reinigungsstationen, Messstationen und/oder Rüstplätze durchgeführt werden. Hierdurch kann eine hohe Flexibilität geschaffen werden und trotz geringem Zeitaufwand, das Regalbediengerät automatisch und zuverlässig eingerichtet oder kalibriert werden.

Nach einem weiteren bevorzugten Ausführungsbeispiel kann das Erfassungssystem, insbesondere optische Erfassungssystem, am Regalbediengerät montierbar ausgestaltet sein und nach Durchführung des voll- und/oder teilautomatischen Einrichtens oder Kalibrierens des Regalbediengeräts getrennt werden. Nach Durchführung des erfindungsgemäßen Einrichtbetriebes bzw. Kalibrierbetriebes sind alle Positionen der Positionsmerkmale abgespeichert. Da es sich bei den Regallagern um stationäre, nicht ohne Weiteres veränderbare Regallager handeln kann, ist eine neuerliche Erfassung der Positionsmerkmale mittels des Erfassungssystems, insbesondere optischen Erfassungssystems, dann nicht mehr ohne Weiteres notwendig, sondern kommt erneut erst im eventuell notwendigen Kalibrierverfahren zum Einsatz.

Um einer Beschädigung des Erfassungssystems, beispielsweise durch herabfallendes Ladegut, zu begegnen, kann dieses deshalb nach Durchführung des erfindungsgemäßen Verfahrens demontiert werden.

In einer weiteren bevorzugten Ausführung kann für eine präzise Positionserfassung eine genau definierbare Lage des Positionsmerkmals zur Werkstückauflage und/oder Maschinenauflage und/oder sonstigen Referenzfläche benötigt werden und in der Steuerungs-/Regelungseinrichtung hinterlegt werden. Es ist besonders vorteilhaft, wenn die Lage zwischen dem Regalbediengerät bzw. dem Fahrwagen derart positioniert ist, dass eine kollisionsfreie und exakte Auf- bzw. Abladung ermöglicht wird, da mittels einer Be- bzw. Entladungsvorrichtung die zu handhabenden Paletten abgelegt oder aufgenommen werden. Um eine derartig präzise Positionierung vornehmen zu können, ist eine genaue Festlegung der Lage des Regalbediengerätes bzw. des Fahrwagens zum Positionsmerkmal des Regalsystems bzw. des Regalplatzes sowie der Maschine, dem Rüstplatz, der Reinigungsstation oder Messstation notwendig. Ebenfalls ist die Lage des Positionsmerkmals zur Werkstückauflage exakt festzulegen, da ansonsten keine Automation des Einrichtbetriebes möglich wäre.

Die Erfindung richtet sich ferner auf ein System mit wenigstens einer Aufnahme- und/oder Ablageposition, wenigstens einem Regalbediengerät, und/oder wenigstens einem Fahrwagen, wenigstens einer Steuerungs-/Regelungseinrichtung, zumindest einem Erfassungssystem, insbesondere einem optischen Erfassungssystems und wenigstens einem Positionsmerkmal, wobei das System zur Durchführung eines Verfahrens zum voll- und/oder teilautomatischen Einrichten oder Kalibrieren nach einem der Ansprüche 1-9 ausgestaltet ist.

Weitere Merkmale, Einzelheiten und Vorteile der Erfindung ergeben sich aus einem anhand der Zeichnung dargestellten Ausführungsbeispiels. Dabei zeigen:
- Fig. 1:: ein Regallager mit einem Regalbediengerät zur Durchführung des erfindungsgemäßen Verfahrens;
- Fig. 2:: einen Fahrwagen mit optischem Erfassungssystem; und

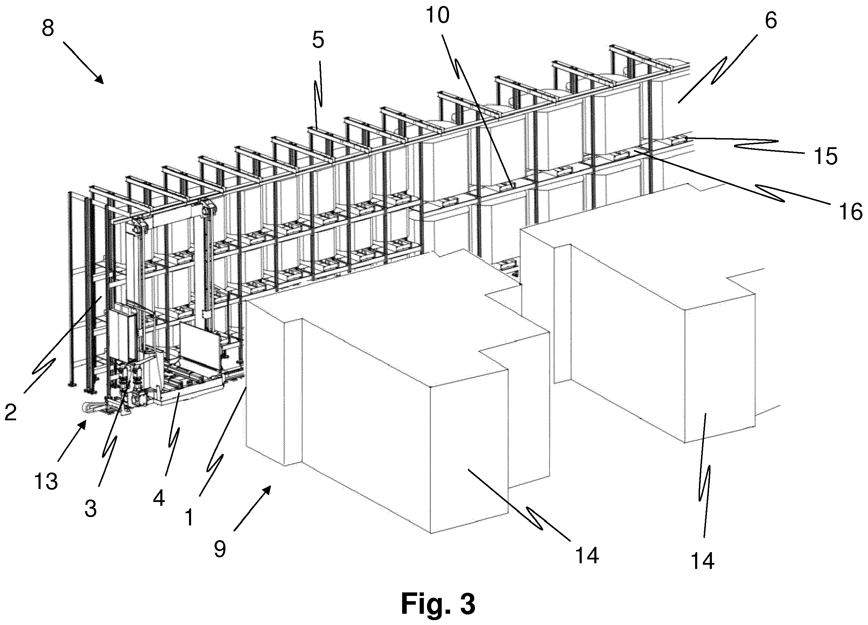

- Fig. 3:: eine perspektivische Ansicht eines Systems mit einer internen Einheit, insbesondere einem Regallager, einer externen Einheit, insbesondere einer Maschine, Reinigungsstation, Messstation, und Regalbediengerät.

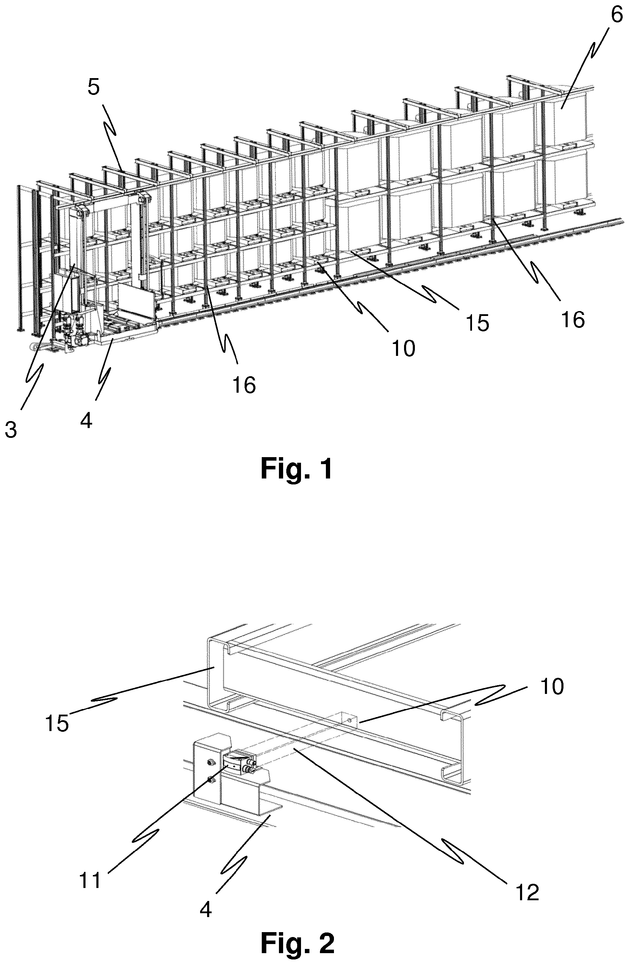

Fig. 1 zeigt ein Regallagersystem , welches zum Durchführen des erfindungsgemäßen Verfahrens ausgebildet ist. Es umfasst ein Regallager 5 oder ein allgemeines Lager 5, welches zur Aufnahme und Ablage von Maschinenpaletten, sonstigen Paletten oder Europaletten sowie sonstigem Lagergut ausgebildet ist. Ein Regalbediengerät 3, welches mit einem Fahrwagen 4 gekoppelt ist, dient zum Be- und Entladen der einzelnen Regalplätze 16. Im gezeigten Ausführungsbeispiel der Fig. 1 ist das Regallager 5 als Palettenspeicher ausgebildet. Die Merkmale Lager oder Regallager sollen hierbei austauschbar sein, wobei das allgemeine Merkmal des Regallagers 5 bevorzugt ist. Am Regalbediengerät 3 oder am Fahrwagen 4 kann ein Erfassungssystem 11, insbesondere ein optisches Erfassungssystem vorgesehen sein, mittels welchem die Positionsmerkmale 10 von einzelnen Regalplätzen 16 erfassbar sind.

Das Regalbediengerät 3 kann in die beiden Verfahrrichtungen 20, 21 verfahren werden, wobei mehr oder weniger Verfahrrichtungen ebenfalls denkbar sind. Innerhalb des Regallagers 5 können beispielsweise Werkstücke 6 auf entsprechenden Werkstückaufnahmen 7 gelagert oder lagerbar sein.

Erfindungsgemäß wird in die Steuerungs-/Regelungseinrichtung eine Position des Positionsmerkmals 10 wenigstens eines ersten Lagerplatzes 16 eingegeben. Dann fährt das Regalbediengerät 3 automatisch die Position gemäß der hinterlegten Position des ersten Lagerplatzes 16 an. Selbstverständlich können im ersten Schritt auch mehrere und insbesondere alle hinterlegten Positionen eingegeben werden, sofern mehr als eine erste Einheit 13 und/oder zweite Einheiten 9 vorhanden sind. Als zweite Einheit 9 werden beispielsweise Maschinen 14, Rüstplätze 14, Reinigungsstationen 14, Messstationen 14 verstanden.

Je nachdem, ob das Regalbediengerät 3 mit einem Fahrwagen 4 gekoppelt ist und ob das Erfassungssystem 11 mit dem Regalbediengerät 3 oder dem Fahrwagen 4 gekoppelt ist, kann die Position des ersten Regalplatzes 16 alternativ oder gleichzeitig auch mit dem Fahrwagen 4 angefahren werden.

Befindet sich das Erfassungssystem 11 nunmehr im Bereich des ersten Positionsmerkmals 10, so wird die genaue Position dieses Positionsmerkmals 10 mittels des Erfassungssystems 11 erfasst. Dann wird eine gegebenenfalls bestehende Abweichung zwischen dem Istwert und der erfassten Position des Positionsmerkmals 10 berechnet und ggf. ein Korrekturwert abgespeichert. Der Korrekturwert kann insbesondere dann abgespeichert werden, wenn die Abweichung zwischen Istwert und hinterlegten oder erfassten Position einen vorbestimmten Grenzwert übersteigt. Anschließend fährt das Regalbediengerät 3 vollautomatisch die einzelnen Positionsmerkmale 10 ab, erfasst diese und speichert diese in der Steuerungs-/Regelungseinheit ab.

Das Verfahren kann mit den einzelnen Schritten so lange wiederholt werden, bis alle Regalplätze 16 automatisch eingerichtet sind. Hierzu kann zu Beginn des Verfahrens die Position aller einzulernenden internen Einheiten 13 oder externen Einheiten 9 beispielsweise mittels CAD-Daten hinterlegt werden, so dass daraufhin die letzten beiden Schritte des automatischen Anfahrens, des Erfassens der Position der Positionsmerkmale 10 und der Berechnung einer Abweichung für alle zuvor hinterlegten Positionen wiederholt werden kann. Nach Erfassung der letzten hinterlegten Position des Positionsmerkmals 10 des letzten Regalplatzes 16 ist das teilautomatische Einrichten des Regallagers 5 beendet.

Jedem Regalplatz 16, jeder Maschine 14, jedem Rüstplatz 14, jeder Messstation 14 und/oder jeder Reinigungsstation 14, kann dabei ein Positionsmerkmal 10 zugeordnet sein, welches in Form eines Strukturelements ausgebildet ist. Das Strukturelement kann als eine durchgängigen Öffnung, vorzugsweise einem Loch bzw. einer Bohrung oder einer oberflächigen Ausnehmung oder einer Erhebung ausgebildet sein. Das Strukturelement muss derart ausgebildet sein, dass das Erfassungssystems 11, vorzugsweise optische Erfassungssystem dieses eindeutig erfassen kann. Ebenfalls ist ein derartiges Positionsmerkmal 10 vorzugsweise auf der zum Regalbediengerät 3 gerichteten Seite des Regallagers 2 angeordnet. Mit Hilfe des optischen Erfassungssystems 11, vorzugsweise einer 2D-Kamera oder einer 3D-Kamera, kann die Positionserkennung durchgeführt werden. Innerhalb eines Erfassungsbereichs 12 der hier verwendeten 2D-Kamera wird die erfasste hinterlegte Position verglichen und bei Abweichungen automatisch korrigiert und gespeichert. Damit kann ein automatisches Einrichten oder Kalibrieren eines Systems 1 realisiert werden.

Diese Ausgestaltung hat den Vorteil, dass keine zusätzlichen Vorrichtungen an dem Regallager 5 vonnöten sind, da die durchgängigen Öffnungen bzw. Ausnehmungen zeitsparend und kostenarm im Herstellungsverfahren des Regallagers 5 bzw. der Bauteile des Regallagers 5 angebracht werden können. Die Positionsmerkmale 10 können direkt im Herstellungsverfahren des Regallagers 5 und der Maschinen 14, Messstaionen 14, Rüstplätzen 14 oder Reinigungsstationen 14 angebracht werden, so dass bei der Montage kein zusätzlicher Montageaufwand entsteht.

Das Einrichten von Regalbediengeräten 3 erfolgt gemäß dem Stand der Technik und je nach Anzahl der Regalplätze 16 unter erheblichem Zeitaufwand. Daher bietet das erfindungsgemäße Verfahren den Vorteil, dass kein manueller Einrichtvorgang vonnöten ist, da mit Hilfe des Fahrwagens 4 bzw. des Regalbediengeräts 3 die Positionen automatisch angefahren werden und von dem Erfassungssystem 11, insbesondere optischen Erfassungssystem erfasst und korrigiert werden können, wodurch die Korrekturwerte der Positionen gespeichert werden. Zudem verringert das erfindungsgemäße Verfahren die Notwendigkeit manueller Tätigkeiten, so dass die Gefahr, durch menschliche Fehler beim manuellen Fahren im Einrichtbetrieb verringert werden kann.

Die eingegebene theoretische Position des Positionsmerkmals 10 des ersten Regalplatzes 16 bzw. die hinterlegten Positionen aller Regalplätze 16, Maschinen 14, Rüstplätze 14, Messstationen 14 und/oder Reinigungsstationen 14, werden automatisch mittels des Fahrwagens 4 bzw. mittels des Regalbediengeräts 3 angefahren und die entsprechenden Positionsmerkmale 10, vorzugsweise mit einem optischen Erfassungssystems 11, insbesondere einer 2D-Kamera oder 3D-Kamera erfasst. Die relative Position der angebrachten Positionsmerkmale 10 zur Werkstückauflage 15 bzw. zu den Regalplätzen 16 oder sonstigen Referenzflächen muss dabei genau definiert und hinterlegt sein. Nach der Erfassung der hinterlegten Position kann der Fahrwagen 4 bzw. das Regalbediengerät 3 anschließend automatisch, mittels der hinterlegten Position, vorzugsweise CAD-Daten die weiteren Regalplätze 16 anfahren. Das Erfassungssystem 11, insbesondere optische Erfassungssystem das Positionsmerkmal bzw. deren Positionsmerkmale 10 erfasst und ggf. korrigiert und die Korrekturwerte in. der Steuerungs-/Regelungseinrichtung hinterlegt.

Ist eine erste Position vorerst nicht bekannt, ist es auch denkbar, das Verfahren derart auszuführen, dass eine Maschineninbetriebnehmer den ersten Regalplatz 16 manuell anfährt und hierdurch die Position eingibt. Die Position kann dabei mittels des optischen Erfassungssystems 11 ermittelt und in der Steuerungs-/Regelungseinrichtung hinterlegt werden oder manuell von dem Maschineninbetriebnehmer eingegeben werden. Die Position der angebrachten Positionsmerkmale 10 relativ zur Werkstückauflage 15 bzw. zum entsprechenden Regalplatz 16 muss dabei genau definiert und hinterlegt sein.

Vorteilhaft ist es dabei, dass die Inbetriebnahme bzw. das automatische verfahrensgemäße voll- und/oder teilautomatischen Einrichten und/oder Kalibrieren und die Ausrichtung des Regalbediengeräts 3 mit Hilfe des optischen Erfassungssystems 11 und den hinterlegten Positionen durchführbar sind. Ebenfalls vorteilhaft ist, dass bei der Inbetriebnahme bzw. beim verfahrensgemäßen voll- und/oder teilautomatischen Einrichten oder Kalibrieren eine automatische, korrekte Ausrichtung des optischen Erfassungssystems 11 auf die Positionsmerkmale 10 durchführbar ist.

Fernerhin kann vorteilhaft vorgesehen sein, dass die Positionsmerkmale 10 in Form einer durchgängigen Öffnung, vorzugsweise in Form eines Lochs ausgestaltet sind.

Des Weiteren ist es vorteilhaft, wenn das Regalbediengerät 3 und das optische Erfassungssystem 11 derart ausgestaltet sind, dass unhabhängig der Anzahl und geometrischen Ausgestaltung, insbesondere Breite, Höhe und Tiefe der Regalplätze 16, Maschinen 14, Reinigungsstationen 14, Messstationen 14 und/oder Rüstplätze 14 erfassbar bzw. bedienbar sind. Somit kann eine hohe Flexibilität des Systems 8 geschaffen werden und trotz geringem Zeitaufwand das Regalbediengeräts 3 automatisch und zuverlässig eingelernt werden.

Vorteilhaft kann es ferner vorgesehen sein, dass zur Bestimmung der Position mittels eines Positionsmerkmals 10 des Regalplatzes 16 die erfassten Daten in der Steuerungs-/Regelungseinrichtung gespeichert werden. Durch das Speichern sind die erfassten Daten jederzeit abrufbar und verwendbar. Die Positionskorrektur des Einrichtvorgangs ist in der Steuerungs-/Regelungseinrichtung hinterlegt und benötigt keine nochmalige Positionserfassung. Diese Speicherung hat den Vorteil, dass bei eventuellen Nachjustierungen die bereits in der Steuerungs-/Regelungseinrichtung gespeicherten Daten verwendet werden können und nur bei Abweichungen Korrekturen vorgenommen werden müssen.

Ebenfalls umfasst die eine Aufnahmeposition 1, insbesondere eine Maschine 14, einen Rüstplatz 14, eine Messstation 14 und/oder eine Reinigungsstation 14, welche zur Ablage- und/oder Aufnahme von Maschinenpaletten, sonstigen Paletten oder Europaletten sowie sonstigem Lagergut ausgebildet sind.

## Patentansprüche

1. Verfahren zum voll- und/oder teilautomatischen Einrichten oder Kalibrieren einer Aufnahme- (1) und/oder einer Ablageposition (2), mit
- wenigstens einem Regalbediengerät (3) und/oder wenigstens einem Fahrwagen (4),
- einer Steuerungs-/Reglungseinrichtung,
- wenigstens einem Erfassungssystem (11), insbesondere einem optischem Erfassungssystem, und
- wenigstens einem Positionsmerkmal (10),
wobei das Verfahren folgende Schritte umfasst:
- manuelle und/oder automatische Hinterlegung der Positionen der Positionsmerkmale (10);
- automatisches Anfahren der hinterlegten Positionen, mittels des Regalbediengeräts (3) und/oder des Fahrwagens (4);
- Erfassen eines Istwerts der Position des Positionsmerkmals (10) mittels des Erfassungssystems (11), insbesondere einem optischen Erfassungssystems; und
- Berechnung einer Abweichung zwischen der hinterlegten Position und dem Istwert, ggf. Durchführung einer Korrektur und ggf. Abspeichern eines Korrekturwertes der Position des Positionsmerkmals (10).

2. Verfahren nach Anspruch 1, **dadurch gekennzeichnet, dass** mittels einer Suchfart des Regalbediengerätes (3) und/oder Fahrwagens (4) vollautomatisch durch Erfassung der Lage der Positionsmerkmale (10) durch das Erfassungssystem (11), insbesondere dem optischen Erfassungssystems, die Hinterlegung der Positionen der Positionsmerkmale (10) durchgeführt wird und das Regalbediengerät (3) und/oder Fahrwagen (4) eingerichtet wird.

3. Verfahren nach Anspruch 1 oder 2, **dadurch gekennzeichnet, dass** mittels manueller Hinterlegung der Position der Positionsdaten, insbesondere mittels CAD-Daten und einer anschließenden Positionsabgleichsfahrt mittels des Erfassungssystems (11), insbesondere dem optischen Erfassungssystems das Regalbediengerätes (3) und/oder Fahrwagens (4) eingerichtet oder kalibriert wird.

4. Verfahren nach einem der vorhergehenden Ansprüche , **dadurch gekennzeichnet, dass** die Ablageposition (2) und die Aufnahmeposition (1) als eine erste Einheit (13), insbesondere als ein Regallager (5) ausgestaltet ist und die Ablage und Aufnahme mittels des Regalbediengerätes (3) und/oder des Fahrwagens (4) durchgeführt wird.

5. Verfahren nach einem der vorhergehenden Ansprüche, **dadurch gekennzeichnet, dass** die Aufnahmeposition (1) und die Ablageposition (2) als eine zweite Einheit (9), insbesondere als eine Maschine (14), eine Reinigungsstation (14), eine Messstation (14) und/oder ein Rüstplatz (14) ausgestaltet ist und die Aufnahme mittels des Regalbediengerätes (3) und/oder des Fahrwagens (4) durchgeführt wird.

6. Verfahren nach einem der vorhergehenden Ansprüche, **dadurch gekennzeichnet, dass** das Positionsmerkmal (10) als ein Strukturelement ausgebildet ist, welches mittels des Erfassungssystems (11), insbesondere einem optischen Erfassungssystem, erfassbar ist.

7. Verfahren nach einem der vorhergehenden Ansprüche, **dadurch gekennzeichnet, dass** das Verfahren unabhängig von der Anzahl und der geometrischen Ausgestaltung, insbesondere der Breite, Höhe und Tiefe der Aufnahme- (1) sowie Ablagepositionen (2) durchgeführt wird.

8. Verfahren nach einem der vorhergehendne Ansprüche, **dadurch gekennzeichnet, dass** das Erfassungssystem (11), insbesondere das optische Erfassungssystem, am Regalbediengerät (3) montierbar ausgestaltet ist und nach Durchführung des voll- und/oder teilautomatischen Einrichtens oder Kalibrierens des Regalbediengeräts (3) getrennt wird.

9. Verfahren nach einem der vorhergehenden Ansprüche, **dadurch gekennzeichnet, dass** für eine präzise Positionserfassung eine genau definierbare Lage des Positionsmerkmals (10) zur Werkstückauflage (15) und/oder Maschinenauflage und/oder sonstigen Referenzfläche bereitgestellt und in der Steuerungs-/Regelungseinrichtung hinterlegt wird.

10. System (8) mit wenigstens einer Aufnahme- (1) und/oder Ablageposition (2), wenigstens einem Regalbedienberät (3) und/oder wenigstens einem Fahrwagen (4), wenigstens einer Steuerungs-/Regelungseinrichtung, wenigstens einem Erfassungssystem (11), insbesondere einem optischen Erfassungssystem, und wenistens einem Positionsmerkmal (10) zur Durchführung eines Verfahrens nach einem der Ansprüche 1 bis 9.
